# FASCICULE DE BREVET EUROPEEN

(11) **EP 2 013 271 B1**
(45) Date de publication et mention de la délivrance du brevet: **09.09.2009**
(21) Numéro de dépôt: 07731778.2
(22) Date de dépôt: 20.03.2007
(51) Int. Cl.: C08K 3/04, C08L 27/16, C08K 3/00, H01B 1/20, B32B 27/20

(54) **COMPOSITION CONDUCTRICE A BASE DE PVDF**
LEITFÄHIGE ZUSAMMENSETZUNG AUF PVDF-BASIS
PVDF-BASED CONDUCTIVE COMPOSITION

(30) Priorité: 14.04.2006 FR 0603335
(43) Date de publication de la demande: 14.01.2009
(73) Titulaire: ARKEMA FRANCE, 92700 Colombes (FR)
(72) Inventeur: BONNET, Anthony, F-27170 Beaumont Le Roger (FR); WERTH, Michael, F-27300 Bernay (FR); TRIBALLIER, Karine, F-27800 Bosrobert (FR)
(86) Numéro de dépôt international: PCT/FR2007/050963
(87) Numéro de publication internationale: WO 2007/119014

(56) Documents cités:
- US-A- 4 582 864
- US-A1- 2003 022 997

## Description

### [Domaine de l'invention]

L'objet de la présente invention est une composition conductrice à base de poly(fluorure de vinylidène) (PVDF). Cette composition peut être notamment utilisée pour la fabrication de structures multicouches telles que des tubes ou des tuyaux.

### [Le problème technique]

Le PVDF est connu pour offrir d'excellentes propriétés de stabilité mécanique, une très grande inertie chimique, ainsi qu'une bonne résistance au vieillissement. Pour certaines applications, comme par exemple le transfert de solvants volatils et inflammables ou l'essence, il est nécessaire de rendre le PVDF conducteur de l'électricité et d'atteindre une resistivité inférieure à 10⁶ Ω.cm.

Afin d'atteindre ce niveau de resistivité, il est nécessaire d'incorporer au PVDF une quantité suffisante d'une charge conductrice (telle que du noir de carbone ou des nanotubes de carbone) sans dégrader les propriétés mécaniques du PVDF et tout en conservant la facilité qu'a le PVDF à être extrudable. L'incorporation, appelée aussi compoundage, se fait généralement à l'aide d'une extrudeuse et on récupère des granulés (le compound). Le compound est ensuite reextrudé pour être mis sous la forme souhaitée (tube, tuyau, container,...). Il est nécessaire que le compound conserve ses bonnes propriétés mécaniques et de conductivité lorsqu'il est reextrudé. On parle de stabilité au cisaillement.

La Demanderesse a mis au point une composition conductrice à base de PVDF qui présente de bonnes propriétés mécaniques, une bonne résistivité superficielle et qui conserve lesdites propriétés lorsque la composition est reextrudée, c'est-à-dire qui est stable au cisaillement.

### [L'art antérieur]

La demande internationale WO 99/33908 décrit une composition antistatique à base de polyamide comprenant un noir de carbone présentant une surface BET comprise entre 5 et 200 m²/g (ASTM D 3037-89) et une absorption d'huile DBP comprise entre 50 et 300 ml/100 g (ASTM D 2414-90). Cette demande ne fait pas référence à du PVDF.

La demande US 2003/0104150 décrit une composition conductrice à base de PVDF, de noir de carbone et d'un copolymère tribloc styrène-butadiène-méthacrylate de méthyle. Le noir de carbone est par exemple l'Ensaco 250. Cette demande ne décrit pas la composition de l'invention car elle ne décrit pas l'avantage à mélanger un PVDF visqueux avec un PVDF fluide.

La demande US 2003/0022997 décrit une composition à base d'un fluoroélastomère à base de VDF, HFP et TFE (FKM) et d'un PVDF. Cette composition peut être rendue conductrice à l'aide d'un noir de carbone. Cette demande ne décrit pas la composition selon l'invention.

### [Brève description de l'invention]

L'invention est relative à une composition conductrice comprenant (en poids) :
- de 30 à 60 parts d'un PVDF fluide ;
- de 25 à 62 parts d'un PVDF visqueux ;
- de 8 à 13 parts d'une charge conductrice ;
- de 0 à 2 parts d'un agent ignifugeant ;
- de 0 à 0,05 parts d'un agent nucléant ;
le total faisant 100 parts.

De préférence, elle comprend en poids :
- de 35 à 50 parts d'un PVDF fluide ;
- de 45 à 55 parts d'un PVDF visqueux ;
- de 8 à 13 parts d'une charge conductrice ;
- de 0 à 2 parts d'un agent ignifugeant ;
- de 0 à 0,05 parts d'un agent nucléant ;
   le total faisant 100 parts.

De préférence, la composition conductrice présente une viscosité à l'état fondu inférieure à 10⁶ Pa.s, de préférence comprise entre 10² et 10⁶ Pa.s.

L'invention est aussi relative à des structures multicouches associant la composition conductrice et un polymère thermoplastique ou un métal.

### [Description détaillée de l'invention]

**S'agissant du PVDF,** il s'agit d'un homopolymère du fluorure de vinylidène (VDF de formule CH₂=CF₂) ou d'un PVDF copolymère, c'est-à-dire un copolymère du VDF comprenant en poids au moins 50%, avantageusement au moins 75%, de préférence au moins 85% de VDF et au moins un autre monomère copolymérisable avec le VDF.

Le comonomère peut être un monomère fluoré choisi par exemple parmi le fluorure de vinyle; le trifluoroéthylène (VF3); le chlorotrifluoroéthylène (CTFE); le 1,2-difluoroéthylène; le tetrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro(1,3-dioxole); le perfluoro(2,2-diméthyl-1,3-dioxole) (PDD). De préférence, le comonomère éventuel est choisi parmi le chlorotrifluoroéthylène (CTFE), l'hexafluoropropylène (HFP), le trifluoroéthylène (VF3) et le tétrafluoroéthylène (TFE).

Le comonomère peut aussi être une oléfine telle que l'éthylène ou le propylène.

On désigne par PVDF fluide un PVDF thermoplastique présentant une viscosité à l'état fondu (mesure à 230°C sous 100 s⁻¹) comprise entre 4 et 15 kP, de préférence entre 4 et 10 kP. De préférence, le PVDF fluide est un homopolymère.

On désigne par PVDF visqueux un PVDF thermoplastique présentant une viscosité à l'état fondu (mesuré à 230°C sous 100 s⁻¹) comprise entre 15 et 40 kP, de préférence entre 15 et 30 kP. De préférence, le PVDF visqueux est un copolymère, plus particulièrement un copolymère VDF-HFP.

**S'agissant de la charge conductrice,** il peut s'agir par exemple d'un noir de carbone, de graphite, de nanotubes de carbone noir ou de tout autre additif capable de rendre conductrice la composition et d'éviter l'accumulation d'électricité statique. Le noir de carbone est plus particulièrement préféré en raison de sa grande disponibilité commerciale et de ses bonnes performances.

Lorsqu'on augmente le taux de noir de carbone dans une composition polymérique, la resistivité évolue d'abord peu, puis lorsqu'on atteint un seuil critique, appelé seuil de percolation, la résistivité chute très brutalement jusqu'à atteindre un niveau relativement stable (zone de plateau), où une nouvelle augmentation du taux de noir de carbone ne modifie plus guère la resistivité.

En dehors de ses propriétés électroconductrices, le noir de carbone se comporte comme une charge telle que le talc, la craie, le kaolin, et affecte donc les propriétés mécaniques du polymère. L'homme du métier sait que le lorsque le taux de charge augmente, la viscosité à l'état fondu du compound augmente ainsi que son module élastique. On pourra se reporter à l'ouvrage suivant pour plus de détails sur les charges dans les polymères : « Handbook of fillers and reinforcement of plastics », Van Nostrand Reinhold Company, isbn 0-442-25372-9 en particulier au chapitre II, section II et au chapitre 16, section VI.

De préférence, le noir de carbone présente une surface BET comprise entre 50 et 200 m²/g, de préférence entre 50 à 100 m²/g (ASTM D 3037-89) et une absorption DBP (dibutyl phtalate) comprise entre 150 et 300 ml/100 g, de préférence entre 150 et 250 ml/100 g (ASTM D 2414-90). De préférence, le noir de carbone présente une résistivité volumique (mesurée sur un compound de HDPE FINATHENE 47100 comportant 25% poids de noir de carbone) inférieure à 20 Ω.cm, avantageusement inférieure à 15 Ω.cm, de préférence inférieure à 10 Ω.cm.

Ce type de noir de carbone (moins structuré) peut être qualifié de conducteur ou semi-conducteur en comparaison des noirs de carbone extra-conducteur dont la surface BET est supérieure à 500 m²/g et l'absorption DBP est supérieure à 300 ml/100 g.

Le fait d'utiliser un noir de carbone moins structuré oblige à en augmenter la teneur en vue d'obtenir une résistivité < 10⁶ Ω.cm, c'est-à-dire que le seuil de percolation est obtenu à une teneur plus élevée, de l'ordre de 10% poids. Ceci présente l'avantage que le dosage du noir de carbone est plus précis que pour un noir de carbone extra-conducteur pour lequel le seuil de percolation se situe vers 3% poids.

Les noirs de carbone commercialisés par a société TIMCAL sous la dénomination ENSACO^{®} 250 ou ENSACO^{®} 260 sont particulièrement efficaces.

| caractéristiques de l'ENSACO^{®} 250 |
|---|
| surface BET (ATSM D3037) : 65 m²/g |
| absorption DBP (ASTM D2414) : 190 ml/100 g |
| densité (ASTM D1513) : 170 kg/m³ |
| pH (ASTM D1512) : 8-11 |
| resistivité volumique (25 % dans FINATHENE 47100) : < 10 Ω.cm |

| caractéristiques de l'ENSACO^{®} 260 |
|---|
| surface BET (ATSM D3037) : 70 m²/g |
| absorption DBP (ASTM D2414) : 190 ml/100 g |
| densité (ASTM D1513) : 170 kg/m³ |
| pH (ASTM D1512) : 8-11 |
| resistivité volumique (25 % dans FINATHENE 47100) : < 5 Ω.cm |

**S'agissant de l'agent ignifugeant,** celui-ci peut être un composé organique ou inorganique. A titre d'exemples, il peut s'agir d'un silicate d'aluminium calciné ou hydraté, d'un tungstate de calcium ou éventuellement d'une nanocharge telle qu'une montmorillonite.

**S'agissant de l'agent nucléant,** sa fonction est de favoriser une cristallisation rapide de la composition, ce qui permet d'avoir une composition stable en termes de propriétés mécaniques (on évite ainsi la cristallisation dite « froide »). Il peut s'agir par exemple de particules de PTFE.

**S'agissant de la composition,** celle-ci comprend en poids :
- de 30 à 60 parts d'un PVDF fluide ;
- de 25 à 62 parts d'un PVDF visqueux ;
- de 8 à 13 parts d'une charge conductrice ;
- de 0 à 2 parts d'un agent ignifugeant ;
- de 0 à 0,05 parts d'un agent nucléant ;
   le total faisant 100 parts.

De préférence, elle comprend en poids :
- de 35 à 50 parts d'un PVDF fluide ;
- de 45 à 55 parts d'un PVDF visqueux ;
- de 8 à 13 parts d'une charge conductrice ;
- de 0 à 2 parts d'un agent ignifugeant ;
- de 0 à 0,05 parts d'un agent nucléant ;
   le total faisant 100 parts.

De préférence, on a constaté que la composition pour laquelle le PVDF fluide est un homopolymère et le PVDF visqueux est un copolymère, plus particulièrement un copolymère VDF-HFP comprenant moins de 10% poids d'HFP présente une excellente résistance chimique.

De préférence aussi, une meilleure tenue chimique est obtenue lorsque la composition ne contient aucun autre polymère que le PVDF fluide et le PVDF visqueux.

De préférence, la composition est extrudable (c'est-à-dire peut être mise en forme à l'aide des techniques courantes d'extrusion) et présente une viscosité à l'état fondu (à 230°C) qui ne dépasse pas 10⁶ Pa.s et qui est de préférence comprise entre 10² et 10⁶ Pa.s.

La composition est préparée par mélange en voie fondue ou dans un solvant des divers ingrédients. Pour le mélange en voie fondue, on utilise les outils de mélange adaptés aux thermoplastiques, avantageusement il s'agit d'une extrudeuse. Pour le mélange dans un solvant, on mélange les divers ingrédients dans un solvant adapté, puis on évapore le solvant.

Lorsque la composition est sous forme de poudre, on peut utiliser la technique de broyage cryogénique et broyer des granulés de la composition.

### Mise en forme de la composition

La composition selon l'invention peut être extrudée sous la forme d'un tube, d'une plaque, d'un jonc, d'un film ou d'une feuille. Le jonc est utilisé pour être ensuite transformé en des pièces diverses telles que par exemple des engrenages, des récipients, des valves, et des parties d'un corps de pompe.

Elle peut aussi être injectée. La technique d'injection permet par exemple d'obtenir des électrodes ou des joints.

La composition selon l'invention peut aussi être dissoute dans un solvant du PVDF telle que la N-méthyl pyrrolidone, le diméthylformamide (DMF), le diméthylsulfoxyde (DMSO) et être utilisée comme peinture. Il est également possible d'utiliser dans certains cas l'acétone.

La composition selon l'invention peut aussi être appliquée par la technique de poudrage électrostatique (powder-coating). La composition sous forme de granulés est d'abord broyée pour être réduite en poudre. Elle peut aussi être transformée par compression à chaud.

La technique de coextrusion permet d'obtenir divers types de structures multicouches sous forme de tubes, plaques, films, feuilles, ou corps creux

### Structures multicouches comprenant une couche de la composition selon l'invention et une couche d'un polymère thermoplastique

Un exemple de structure multicouche comprend :
- une couche d'au moins un polymère thermoplastique
- une couche de la composition conductrice

Un autre exemple de structure multicouche comprend dans l'ordre :
- une couche de la composition conductrice
- une couche d'au moins un polymère thermoplastique
- une couche de la composition conductrice

La structure multicouche peut être mise sous la forme de tubes, plaques, films, feuilles ou corps creux. Dans le cas d'un tube ou d'un corps creux, la couche de la composition conductrice peut être la couche interne ou bien la couche externe. La structure multicouche sous forme de tube ou de corps creux comprend donc dans l'ordre :
- une couche interne d'au moins un polymère thermoplastique
- une couche externe de la composition conductrice
ou bien
- une couche interne de la composition conductrice
- une couche externe d'au moins un polymère thermoplastique
ou bien
- une couche interne de la composition conductrice
- une couche intermédiaire d'au moins un polymère thermoplastique
- une couche externe de la composition conductrice

Par exemple, un tube comprenant une couche interne de la composition conductrice et une couche externe d'au moins un polymère thermoplastique peut être utilisé pour transporter un liquide inflammable (essence, ou solvant). De même, un tube comprenant une couche interne d'au moins un polymère thermoplastique et une couche externe de la composition conductrice peut être utilisé dans une atmosphère explosive.

Le polymère thermoplastique est par exemple :
- un polyamide (par exemple PA 6, 11, 12, ou 6,6) ;
- une polyoléfine (PE, PP, EPDM)
- le polychlorure de vinyle (PVC)
- le PVC chloré (C-PVC)
- le polyéthylène téréphtalate (PET)
- l'EVOH (copolymère éthylène éthylène-alcool vinylique)
- le polyéthercétone (PEEK)
- le polyoxyméthylène (acétal)
- le polyéthersulfone
- un polyuréthane
- un polymère fluoré tel qu'un PVDF, un polyfluorure de vinyle, un copolymère TFE-éthylène (ETFE), un copolymère TFE-HFP (FEP), un copolymère TFE-éthylène-HFP (EFEP), un copolymère TFE-HFP-VDF (THV) ou un PTFE.

Dans les structures précédentes, au moins une couche d'un liant peut être disposée entre au moins une couche de la composition conductrice et au moins une couche du polymère thermoplastique de façon à renforcer l'adhésion entre les couches. Cette couche peut être éventuellement dédoublée. C'est-à-dire qu'entre la couche de polymère thermoplastique et la couche de la composition conductrice, on peut disposer une 1^{ère} couche de liant et une 2^{ème} couche d'un autre liant, les deux couches de liant étant disposées l'une contre l'autre. Par exemple, lorsque le polymère thermoplastique est un polyéthylène, la 1^{ère} couche de liant peut être une polyoléfine porteuse de fonctions polaires et la 2^{ème} couche de liant peut être un polymère fluoré porteur de fonctions polaires qui réagissent avec les fonctions polaires de la polyoléfine. Le polymère fluoré porteur de fonctions polaires peut être par exemple un PVDF sur lequel on a greffé des fonctions anhydride d'acide carboxylique et la polyoléfine porteuse de fonctions polaires peut être un copolymère de l'éthylène et de (méth)acrylate de glycidyle.

De préférence, dans toutes les structures décrites précédemment, les couches sont disposées l'une contre l'autre.

### Structures multicouches comprenant une couche de la composition selon l'invention et un métal

La structure multicouche peut aussi comprendre une couche de la composition conductrice et une couche d'un métal. La couche du métal peut être éventuellement recouverte d'un primaire d'adhésion. De préférence, une couche de liant est disposée entre la couche du métal et la couche de la composition conductrice ou bien entre la couche de primaire d'adhésion et la couche de la composition conductrice. On a donc dans l'ordre :
- une couche de métal ;
- éventuellement une couche de primaire d'adhésion ;
- éventuellement une couche de liant ;
- une couche de la composition conductrice.

Le liant est par exemple un polymère fluoré porteur de fonctions polaires, par exemple un PVDF sur lequel on a greffé des fonctions anhydride d'acide carboxylique ou bien des fonctions époxyde. La demande EP 1484346 décrit un procédé d'obtention d'un PVDF porteur de fonctions polaires (procédé de greffage par irradiation).

Cette structure peut être mise sous la forme d'un tube ou d'un corps creux. La couche de la composition conductrice est alors la couche externe ou bien interne.

### [Exemples]

Les mélanges ont été réalisés sur une extrudeuse BUSS à 230°C à 20 kg/heure. Les PVDF sont introduits en première zone puis le noir de carbone en deuxième zone. Les viscosités à l'état fondu sont données à 230°C sous 100 s-1.

### Produits utilisés

Kynar 720 (K720) : PVDF homopolymère commercialisé par Arkema ayant une viscosité à l'état fondu de 6-12 kP.
Kynarflex 2850 (KF 2850) : PVDF copolymère VDF-HFP (6% poids HFP) ayant une viscosité de 23-27 kP.
Kynarflex 2950-05 (KF 2950) : PVDF copolymère VDF-HFP (17% poids HFP) ayant une viscosité de 6-12 kP.
Kynarflex 2750-01 (KF 2750) : PVDF copolymère VDF-HFP (17% poids HFP) ayant une viscosité de 20-25 kP.
Ensaco 260 : voir les caractéristiques données précédemment
Ketjenblack 300 EC : noir de carbone d'AKZO CHIMIE qui présente une absorption DBP comprise entre 350 et 385 ml/100 g et une surface BET de 800 m²/g.

### Mesures effectuées

σ**₁ (**Ω **cm) :** résistivité volumique mesurée après le mélange en extrudeuse
σ**₂ (**Ω **cm) :** résistivité volumique mesurée après une seconde extrusion
**C₂₃ (kJ/m²) :** choc Charpy mesuré à 23°C
**C₋₃₀ (kJ/m²) :** choc Charpy mesuré à -30°C
ε **ᵣ₂₃ (%) :** déformation à la rupture mesurée à 23°C
σ**_{T} (**Ω **cm)** : résistivité volumique mesurée sur un tube de 32 mm de diamètre ext. et d'épaisseur 3 mm
ε**ᵣ₂₃ (%) :** déformation à la rupture mesurée à 23°C sur un tube de 32 mm de diamètre ext. et d'épaisseur 3 mm

Le mélange de l'exemple 1 présente d'excellentes caractéristiques électriques et mécaniques :
• une bonne stabilité au cisaillement (voir les valeurs de σ₁ et σ₂ )
• une résistivité volumique < 10⁶ Ω cm
• une bonne tenue au choc

**Tableau 1**

| **exemples** | **composition (% en poids)** | σ**₁ [Ω cm]** | σ**₂ [Ω cm]** | **C₂₃ [kJ/m²]** | **C-₃₀ [kJ/m²]** | ε **ᵣ₂₃ [%]** | σ**_{T} [Ω cm]** | ε**ᵣ₂₃ [%]** |
|---|---|---|---|---|---|---|---|---|
| Ex.1 | K720 (40,5%) + KF2850 (49,5%) + Ensaco 260 (10%) | 40 | 45 | 8 | 4 | 30 | 100 | 25 |
| Ex.2 | K720 (39,6%)+ KF2850 (48,4%) + Ensaco 250 (12%) | 10⁵ | 10⁷ | 8 | 3 | 25 | 10⁶ | 20 |
| Ex.3 (comp.) | K720 (43,65%)+ KF2850 (53,35%) + KB 300 EC (3%) | 10³ | >10¹⁰ | 3 | <1 | <10 | >10¹⁰ | <10 |
| Ex.4 (comp.) | K720 (90%) + Ensaco 250 (10%) | 50 | 45 | 5 | <1 | <10 | 60 | <10 |
| Ex.5 (comp.) | K720 (90%) + Ensaco 260 (12%) | 7 10⁴ | 10⁶ | 5 | <1 | <10 | 10⁶ | <10 |
| Ex.6 (comp.) | K720 (97%) + KB 300 EC (3%) | 7 10² | 10⁵ | 2,8 | <1 | <10 | 10⁸ | <10 |
| Ex.7 | KF2950-05 (40,5%) + KF 2750-01 (49,5%) + Ensaco 260 | 43 | 51 | pas de casse | 4,5 | 120 | 110 | 10⁷ |

## Revendications

1. Composition conductrice comprenant en poids :
• de 30 à 60 parts d'un PVDF thermoplastique fluide présentant une viscosité à l'état fondu (mesuré à 230°C sous 100 s⁻¹) comprise entre 4 et 15 kP, de préférence entre 4 et 10 kP ;
• de 25 à 62 parts d'un PVDF thermoplastique visqueux présentant une une viscosité à l'état fondu (mesuré à 230°C sous 100 s⁻¹) comprise entre 15 et 40 kP, de préférence entre 15 et 30 kP ;
• de 8 à 13 parts d'une charge conductrice ;
• de 0 à 2 parts d'un agent ignifugeant ;
• de 0 à 0,05 parts d'un agent nucléant ;
le total faisant 100 parts.

2. Composition selon la revendication 1 **caractérisée en ce qu'**elle comprend en poids :
• de 35 à 50 parts de PVDF fluide ;
• de 45 à 55 parts de PVDF visqueux ;
• de 8 à 13 parts d'une charge conductrice ;
• de 0 à 2 parts d'un agent ignifugeant ;
• de 0 à 0,05 parts d'un agent nucléant ;
le total faisant 100 parts.

3. Composition selon l'une des revendications 1 ou 2 **caractérisée en ce que** le PVDF fluide est un homopolymère.

4. Composition selon l'une des revendications 1 à 3 **caractérisée en ce que** le PVDF visqueux est un copolymère.

5. Composition selon la revendication 4 **caractérisée en ce que** le PVDF visqueux est un copolymère VDF-HFP comprenant moins de 10% en poids d'HFP.

6. Composition selon l'une quelconque des revendications précédentes
**caractérisée en ce que** la charge conductrice est un noir de carbone présentant une surface BET comprise entre 50 et 200 m²/g, de préférence entre 50 à 100 m²/g (ASTM D 3037-89) et une absorption DBP (dibutyl phtalate) comprise entre 150 et 300 ml/100 g, de préférence entre 150 et 250 ml/100 g ASTM D 2414-90).

7. Composition selon l'une quelconque des revendications précédentes **caractérisée en ce que** la charge conductrice présente une résistivité volumique (mesurée sur un compound dé HDPE FINATHENE 47100 comportant 25% poids de noir de carbone) inférieure à 20 Ω.cm, avantageusement inférieure à 15 Ω.cm, de préférence inférieure à 10 Ω.cm.

8. Composition selon l'une quelconque des revendications précédentes
**caractérisée en ce que** la composition conductrice présente une viscosité à l'état fondu à 230°C inférieure à 10⁶ Pa.s, de préférence comprise entre 10² et 10⁶ Pa.s.

9. Structure multicouche comprenant :
• une couche d'au moins un polymère thermoplastique
• une couche de la composition conductrice selon l'une quelconque des revendications 1 à 8.

10. Structure multicouche comprenant dans l'ordre :
• une couche de la composition conductrice selon l'une quelconque des revendications 1 à 8 ;
• une couche d'au moins un polymère thermoplastique
• une couche de la composition conductrice selon l'une quelconque des revendications 1 à 8.

11. La structure multicouche sous forme de tube ou de corps creux comprend donc dans l'ordre :
• une couche interne d'au moins un polymère thermoplastique
• une couche externe de la composition conductrice
ou bien
• une couche interne de la composition conductrice
• une couche externe d'au moins un polymère thermoplastique
ou bien
• une couche interne de la composition conductrice
• une couche intermédiaire d'au moins un polymère thermoplastique
• une couche externe de la composition conductrice
la composition conductrice étant telle que définie à l'une quelconque des revendications 1 à 8.

12. Structure multicouche selon l'une des revendications 9 à 11 **caractérisée en ce que** le polymère thermoplastique est choisi parmi :
• un polyamide ;
• une polyoléfine ;
• le polychlorure de vinyle (PVC)
• le PVC chloré (C-PVC)
• le polyéthylène téréphtalate (PET)
• l'EVOH (copolymère éthylène éthylène-alcool vinylique)
• le polyéthercétone (PEEK)
• le polyoxyméthylène (acétal)
• le polyéthersulfone
• un polyuréthane
• un polymère fluoré tel qu'un PVDF, un polyfluorure de vinyle, un copolymère TFE-éthylène (ETFE), un copolymère TFE-HFP (FEP), un copolymère TFE-éthylène-HFP (EFEP), un copolymère TFE-HFP-VDF (THV) ou un PTFE.

13. Structure multicouche selon l'une des revendications 9 à 12 **caractérisée en ce qu'**au moins une couche d'un liant est disposée entre au moins une couche de la composition conductrice et au moins une couche du polymère thermoplastique.

14. Structure multicouche comprenant dans l'ordre :
• une couche de métal ;
• éventuellement une couche de primaire d'adhésion ;
• éventuellement une couche de liant ;
• une couche de la composition conductrice telle que définie à l'une quelconque des revendications 1 à 8.

15. Structure multicouche selon la revendication 14 **caractérisée en ce qu'**elle est sous forme d'un tube ou d'un corps creux.

## Claims

1. Conducting composition comprising, by weight:
• 30 to 60 parts of a fluid thermoplastic PVDF having a melt viscosity (measured at 230°C and at 100 s⁻¹) of between 4 and 15 kP, preferably between 4 and 10 kP;
• 25 to 62 parts of a viscous thermoplastic PVDF having a melt viscosity (measured at 230°C and at 100 s⁻¹) of between 15 and 40 kP, preferably between 15 and 30 kP;
• 8 to 13 parts of a conducting filler;
• 0 to 2 parts of a fire retardant; and
• 0 to 0.05 parts of a nucleating agent,
the total making 100 parts.

2. Composition according to Claim 1, **characterized in that** it comprises, by weight:
• 35 to 50 parts of fluid PVDF;
• 45 to 55 parts of viscous PVDF;
• 8 to 13 parts of a conducting filler;
• 0 to 2 parts of a fire retardant; and
• 0 to 0.05 parts of a nucleating agent,
the total making 100 parts.

3. Composition according to either of Claims 1 and 2, **characterized in that** the fluid PVDF is a homopolymer.

4. Composition according to one of Claims 1 to 3, **characterized in that** the viscous PVDF is a copolymer.

5. Composition according to Claim 4, **characterized in that** the viscous PVDF is a VDF/HFP copolymer containing less than 10% HFP by weight.

6. Composition according to any one of the preceding claims, **characterized in that** the conducting filler is a carbon black having a BET surface area of between 50 and 200 m²/g, preferably between 50 and 100 m²/g (ASTM D 3037-89) and a DBP (dibutyl phthalate) absorption of between 150 and 300 ml/100 g, preferably between 150 and 250 ml/100 g (ASTM D 2414-90).

7. Composition according to any one of the preceding claims, **characterized in that** the conducting filler has a volume resistivity (measured on a FINATHENE 47100 HDPE compound containing 25% carbon black by weight) of less than 20 Ω.cm, advantageously less than 15 Ω.cm, and preferably less than 10 Ω.cm.

8. Composition according to any one of the preceding claims, **characterized in that** the conducting composition has a melt viscosity at 230°C of less than 10⁶ Pa.s, preferably between 10² and 10⁶ Pa.s.

9. Multilayer structure comprising:
• a layer of at least one thermoplastic polymer; and
• a layer of the conducting composition according to any one of Claims 1 to 8.

10. Multilayer structure comprising, in the following order:
• a layer of the conducting compositon according to any one of Claims 1 to 8;
• a layer of at least one thermoplastic polymer; and
• a layer of the conducting composition according to any one of Claims 1 to 8.

11. Multilayer structure in the form of a tube or hollow body, therefore comprising in the following order:
• an inner layer of at least one thermoplastic polymer; and
• an outer layer of the conducting composition; or else
• an inner layer of the conducting composition; and
• an outer layer of at least one thermoplastic polymer;
or else
• an inner layer of the conducting composition;
• an interlayer of at least one thermoplastic polymer; and
• an outer layer of the conducting composition,
the conducting composition being as defined in any one of Claims 1 to 8.

12. Multilayer structure according to one of Claims 9 to 11, **characterized in that** the thermoplastic polymer is chosen from:
• a polyamide;
• a polyolefin;
• polyvinyl chloride (PVC);
• chlorinated PVC (C-PVC);
• polyethylene terephthalate (PET);
• EVOH (ethylene/vinyl alcohol copolymer);
• polyetheretherketone (PEEK);
• polyoxymethylene (Acetal);
• polyethersulphone;
• a polyurethane;
• a fluoropolymer such as a PVDF, a polyvinyl fluoride, an ethylene/TFE copolymer (ETFE), a TFE/HFP copolymer (FEP), an ethylene/TFE/HFP copolymer (EFEP), a TFE/HFP/VDF copolymer (THV) or a PTFE.

13. Multilayer structure according to one of Claims 9 to 12, **characterized in that** at least one tie layer is placed between at least one layer of the conducting composition and at least one layer of the thermoplastic polymer.

14. Multilayer structure comprising, in the following order:
• a layer of metal;
• optionally, an adhesion primer layer;
• optionally, a tie layer; and
• a layer of the conducting composition as defined in any one of Claims 1 to 8.

15. Multilayer structure according to Claim 14, **characterized in that** it is in the form of a tube or hollow body.

## Patentansprüche

1. Leitfähige Zusammensetzung, enthaltend, bezogen auf das Gewicht:
• 30 bis 60 Teile eines fluiden thermoplastischen PVDF mit einer Schmelzeviskosität (gemessen bei 230°C und 100 s⁻¹) zwischen 4 und 15 kP und vorzugsweise zwischen 4 und 10 kP;
• 25 bis 62 Teile eines viskosen thermoplastischen PVDF mit einer Schmelzeviskosität (gemessen bei 230°C und 100 s⁻¹) zwischen 15 und 40 kP und vorzugsweise zwischen 15 und 30 kP;
• 8 bis 13 Teile eines leitfähigen Füllstoffs;
• 0 bis 2 Teile eines Flammschutzmittels;
• 0 bis 0,05 Teile eines Nukleierungsmittels;
wobei sich die Summe auf 100 Teile beläuft.

2. Zusammensetzung nach Anspruch 1, **dadurch gekennzeichnet, daß** sie, bezogen auf das Gewicht:
• 35 bis 50 Teile fluides PVDF;
• 45 bis 55 Teile viskoses PVDF;
• 8 bis 13 Teile eines leitfähigen Füllstoffs;
• 0 bis 2 Teile eines Flammschutzmittels;
• 0 bis 0,05 Teile eines Nukleierungsmittels;
enthält, wobei sich die Summe auf 100 Teile beläuft.

3. Zusammensetzung nach Anspruch 1 oder 2, **dadurch gekennzeichnet, daß** es sich bei dem fluiden PVDF um ein Homopolymer handelt.

4. Zusammensetzung nach einem der Ansprüche 1 bis 3, **dadurch gekennzeichnet, daß** es sich bei dem viskosen PVDF um ein Copolymer handelt.

5. Zusammensetzung nach Anspruch 4, **dadurch gekennzeichnet, daß** es sich bei dem viskosen PVDF um ein VDF-HFP-Copolymer mit weniger als 10 Gew.-% HFP handelt.

6. Zusammensetzung nach einem der vorhergehenden Ansprüche, **dadurch gekennzeichnet, daß** es sich bei dem leitfähigen Füllstoff um einen Ruß mit einer BET-Oberfläche zwischen 50 und 200 m²/g und vorzugsweise zwischen 50 und 100 m²/g (ASTM D 3037-89) und einer DBP-Absorption (Dibutylphthalat-Absorption) zwischen 150 und 300 ml/100 g und vorzugsweise zwischen 150 und 250 ml/100 g (ASTM D 2414-90) handelt.

7. Zusammensetzung nach einem der vorhergehenden Ansprüche, **dadurch gekennzeichnet, daß** der leitfähige Füllstoff einen spezifischen Durchgangswiderstand (gemessen an einem FINATHENE-47100-HDPE-Compound mit einem Rußgehalt von 25 Gew.-%) von weniger als 20 Ω.cm, vorteilhafterweise weniger als 15 Ω.cm und vorzugsweise weniger als 10 Ω.cm aufweist.

8. Zusammensetzung nach einem der vorhergehenden Ansprüche, **dadurch gekennzeichnet, daß** die leitfähige Zusammensetzung eine Schmelzeviskosität bei 230°C von weniger als 10⁶ Pa.s und vorzugsweise zwischen 10² und 10⁶ Pa.s aufweist.

9. Mehrschichtstruktur, umfassend:
• eine Schicht aus mindestens einem thermoplastischen Polymer und
• eine Schicht aus der leitfähigen Zusammensetzung nach einem der Ansprüche 1 bis 8.

10. Mehrschichtstruktur, umfassend in der angegebenen Reihenfolge:
• eine Schicht aus der leitfähigen Zusammensetzung nach einem der Ansprüche 1 bis 8,
• eine Schicht aus mindestens einem thermoplastischen Polymer und
• eine Schicht aus der leitfähigen Zusammensetzung nach einem der Ansprüche 1 bis 8.

11. Mehrschichtstruktur in Form eines Rohrs oder Hohlkörpers, daher umfassend in der angegebenen Reihenfolge:
• eine innere Schicht aus mindestens einem thermoplastischen Polymer und
• eine äußere Schicht aus der leitfähigen Zusammensetzung,
oder auch
• eine innere Schicht aus der leitfähigen Zusammensetzung und
• eine äußere Schicht aus mindestens einem thermoplastischen Polymer,
oder auch
• eine innere Schicht aus der leitfähigen Zusammensetzung,
• eine Zwischenschicht aus mindestens einem thermoplastischen Polymer und
• eine äußere Schicht aus der leitfähigen Zusammensetzung,
wobei die leitfähige Zusammensetzung wie in einem der Ansprüche 1 bis 8 definiert ist.

12. Mehrschichtstruktur nach einem der Ansprüche 9 bis 11, **dadurch gekennzeichnet, daß** das thermoplastische Polymer unter:
• einem Polyamid;
• einem Polyolefin;
• Polyvinylchlorid (PVC);
• chloriertem PVC (C-PVC);
• Polyethylenterephthalat (PET);
• EVOH (Ethylen-Vinylalkohol-Copolymer);
• Polyetherketon (PEEK);
• Polyoxymethylen (Acetal);
• Polyethersulfon;
• Polyurethan und
• einem Fluorpolymer wie PVDF, einem Polyvinylfluorid, einem TFE-Ethylen-Copolymer (ETFE), einem TFE-HFP-Copolymer (FEP), einem TFE-Ethylen-HFP-Copolymer (EFEP), einem TFE-HFP-VDF-Copolymer (THV) oder einem PTFE
ausgewählt ist.

13. Mehrschichtstruktur nach einem der Ansprüche 9 bis 12, **dadurch gekennzeichnet, daß** zwischen mindestens einer Schicht aus der leitfähigen Zusammensetzung und mindestens einer Schicht aus thermoplastischem Polymer eine Bindemittelschicht angeordnet ist.

14. Mehrschichtstruktur, umfassend in der angegebenen Reihenfolge:
• eine Metallschicht;
• gegebenenfalls eine Haftprimerschicht;
• gegebenenfalls eine Bindemittelschicht;
• eine Schicht aus der leitfähigen Zusammensetzung gemäß einem der Ansprüche 1 bis 8.

15. Mehrschichtstruktur nach Anspruch 14, **dadurch gekennzeichnet, daß** sie in Form eines Rohrs oder eines Hohlkörpers vorliegt.
